# EUROPEAN PATENT SPECIFICATION

(11) **EP 3 763 861 B1**
(45) Date of publication and mention of the grant of the patent: **08.03.2023**
(21) Application number: 20180238.6
(22) Date of filing: 16.06.2020
(51) Int. Cl.: D04B 37/02, G06F 30/10

(54) **KNIT DESIGN SYSTEM TO CREATE A PATTERN DATA ADAPTED TO A LENGTH SIZE OF A BODY**
STRICKDESIGNSYSTEM ZUR ERZEUGUNG VON MUSTERDATEN, DIE AN DIE LÄNGENGRÖSSE EINES KÖRPERS ANGEPASST SIND
SYSTÈME DE CONCEPTION DE TRICOTS POUR LA CRÉATION DE DONNÉES DE PATRON ADAPTÉ À UNE LONGUEUR D'UN CORPS

(30) Priority: 18.06.2019 JP 2019113052
(43) Date of publication of application: 13.01.2021
(73) Proprietor: SHIMA SEIKI MFG., LTD., Wakayama 641-8511 (JP)
(72) Inventor: KITAGAWA, Yosuke, Wakayama-shi Wakayama 641-8511 (JP); MAEOKA, Shigeki, Wakayama-shi Wakayama 641-8511 (JP); KAMEI, Takafumi, Wakayama-shi Wakayama 641-8511 (JP); TERAI, Koichi, Wakayama-shi Wakayama 641-8511 (JP)
(74) Representative: Wimmer, Hubert

(56) References cited:
- EP-A2- 2 492 384
- WO-A1-2016/044288

## Description

### Technical Field

The present invention relates to a knit design system that can edit design data of a knitted fabric to be knitted by a flat knitting machine.

### Background Art

Mass customization has recently been drawing attention in the field of apparel. An example of this is the following production modeling. Apparel manufacturers and the like preset basic sizes (such as, e.g., S, M, L) for each piece of wear. The actual measurements of the body of a customer are compared with the basic sizes, and the piece of wear from basic sizes that is most fitted to the actual measurements of a customer is selected from pieces of wear selected by the customer. The size of the selected piece of wear is adjusted based on the actual measurements of the customer, and a product is made. Furthermore, the color or pattern of each product may be changed according to the desire of the customer.

It is expected that the above-described production modeling can provide pieces of wear that are close to the desires of customers at the same level of price as those of mass-production items, and inventories can be practically eliminated.

An example of the above-described production modeling is "made-to-measure" for suits made of cloth. In made-to-measure for cloth suits, paper patterns of basic sizes for each suit are prepared, a paper pattern is adjusted in a possible range so as to fit to the actual measurements of the body of a customer, cloth is cut along the adjusted paper pattern, and the cut pieces of the clothes are sewn together, thereby producing the suit.

On the other hand, for knit wear, conventionally, design data for a knitted fabric is created, and the knitted fabric is knitted based on the design data using a flat knitting machine (see, for example, Patent Literature 1). Design data is data that includes information relating to stitches constituting a knitted fabric, and defines what types of stitches are used in each portion of the knitted fabric and in which order knitting is to be performed. Accordingly, design data includes, for example, information relating to dimensions of a knitted fabric, and information relating to patterns of the knitted fabric.

Patent Literature 1 discloses that design data is made visible as a design sheet and is displayed on a monitor, and in this state, the size is changed on the design data.

### Citation List

### Patent Literature

Patent Literature 1: WO 2002/033598A

In connection with the knit design method known from EP 2 492 384 A2 data regarding the design of a knit product input by an operator is converted into design data of the knit product, and the arrangement and the connection of stitches are displayed on a color monitor. If an instruction to insert or delete a wale or course of stitches is input, whether or not functional data is included in the input range is detected, and an insert or delete position is shifted so as not to include functional data if functional data is included in the input range.

Prior art document WO 2016/044288 A1 discloses a knit design system in which apparel patterns may be generated as a function of custom apparel information provided by a user, such as one or more measurements, colors, etc., such that the user can have apparel custom-knitted to their particular size and shape without having to acquiesce the high expense and long wait times typically associated with custom-fit clothing. After a custom apparel pattern is generated, a custom- knitted article can be manufactured based on the pattern by transmitting appropriate information to a knitting machine. Data produced while generating custom apparel patterns can be stored and used to optimize and improve the manufacturing of customized knitwear for subsequent users.

### Summary of Invention

### Technical Problem

If mass customization of knit wear that is knitted using a flat knitting machine is realized, it will be necessary to prepare a huge number of pieces of design data, taking into consideration that a knitted fabric keeps a predetermined design while fitting to the actual measurements of the body of a customer.

The bodies of customers vary. Accordingly, if, for example, pieces of design data of basic sizes are prepared, and design data of a basic size is modified based on the actual measurements, this takes a lot of time compared to a case where a "made-to-measure" paper pattern for cloth is adjusted. If instantaneousness is taken into consideration, it will be conceivable that many pieces of design data of body dimensions are created in advance on the assumption that the bodies of customers vary. However, it also takes a lot of time to create a huge number of pieces, namely, e.g., several thousands of pieces of design data or more in advance. Furthermore, in this case, an operator who creates the design data is also under a large burden.

Therefore, it is an object of the present invention to provide a knit design system with which it is possible to knit a knitted fabric that fits to the body of a customer, and reduce the number of pieces of design data to be prepared in advance.

### Solution to Problem

This and other objects are solved by a knit design system defined in claim 1. Preferred embodiments of the knit design system is stated in claims 2 to 5.

Thus, according to the present invention, a knit design system for causing a flat knitting machine to knit a knitted fabric based on design data that includes information relating to stitches constituting the knitted fabric, including: an input unit configured to input information relating to the actual measurements of the body of a customer;
a memory in which the design data that corresponds to a predetermined number of body dimensions set in advance is stored as basic data;
a selection unit configured to compare an input actual measurement of a body of a customer with the body dimensions, and select, from the basic data, possible data that is fitted to the actual measurement;
a first calculation unit configured to calculate, based on the actual measurement, a length dimension that is suitable for the knitted fabric;
a second calculation unit configured to calculate, based on a difference between a length dimension set in the possible data and the calculated length dimension, the number of stitch rows along a course direction that are to be used for a change in a length direction with respect to the length dimension of the possible data;
a change determination unit configured to determine one or more positions of stitch rows in the possible data at which the change in the length direction is to be made; and
a creating unit configured to create modification data, by adding or deleting the stitch rows with respect to the possible data based on the calculated number of stitch rows and the determined position,
wherein, in the basic data, a plurality of variable courses in which at least one of modifications of inserting and deleting a stitch row along the course direction is possible, and a fixed course in which both of the modifications are prohibited are set, and
the change determination unit selects, from the variable courses, the stitch rows to be used for the change.

As an embodiment of the knit design system of the present invention,
the change determination unit may be configured to be able to set a preferential order of the modification for the plurality of variable course, and may select the stitch rows in the set preferential order.

As an embodiment of the knit design system of the present invention,
the change determination unit may be configured to evenly distribute the stitch row positions to be used for the change over the plurality of variable courses.

As an embodiment of the knit design system of the present invention,
the change determination unit may be configured to be able to set an upper limit number of stitch rows to be added or deleted to or from the selected variable courses.

As an embodiment of the knit design system of the present invention,
the fixed course may include at least one type of stitch row selected from a group constituted by a stitch row for widening, a stitch row for narrowing, and a stitch row constituting a predetermined pattern. Advantageous Effects of Invention

According to the knit design system of the present invention, since the direction of modification to be made on the possible data is limited to the length direction, the number of pieces of basic data to be prepared in advance needs to be small, compared to a case where the direction of modification is not limited. In this respect, the burden on an operator who creates basic data is reduced.

Also, even if the number of pieces of basic data is small, a length dimension such as a body length or a sleeve length is adjusted with the possible data, based on the actual measurement of the body of a customer. Accordingly, it is possible to knit a knitted fabric having a body length or sleeve length that is fitted to the actual measurement of a customer's body.

Furthermore, since stitch rows are added or deleted in the variable courses except for the fixed course, a predetermined design is likely to be maintained.

According to the knit design system of the present invention in which the preferential order of the modification can be set, a predetermined design or silhouette is likely to be maintained. The reason is that, as the position at which modification is preferentially made in the variable course, a position at which a predetermined design or silhouette is hardly affected can be set.

According to the knit design system of the present invention in which the stitch rows to be used for the change are evenly distributed, a predetermined design or silhouette is likely to be maintained. The reason is that, as a result of the same number of stitch rows being added or deleted to or from a plurality of variable courses, the influence on the design or silhouette due to adding or deleting the stitch rows is likely to be reduced, compared to a case where a plurality of stitch rows are added or deleted to or from one variable course in a concentrated manner.

According to the knit design system of the present invention in which the upper limit number of stitch rows to be added or deleted can be set, a predetermined design or silhouette is likely to be maintained. The reason is that it is possible to set the number of rows that are to be added or deleted to or from the selected variable courses to such an extent that a predetermined design or silhouette is less likely to be affected.

According to the knit design system of the present invention in which the fixed course includes the above-described specific stitch row, a predetermined design or silhouette is likely to be maintained, and a knitted fabric knitted with a favorable knitting efficiency is likely to be obtained. The reason is that the above-described specific stitch row is likely to affect, for example, the predetermined design or the knitting efficiency of the flat knitting machine, and the variable course is not such a stitch row.

### Brief Description of Drawings

FIG. 1 is a functional block diagram illustrating a knit design system according to Embodiment 1.
FIG. 2 is a diagram illustrating an example of a body dimension table for knit wear.
FIG. 3 is a diagram illustrating a design sheet of possible data.
FIG. 4 is a diagram illustrating a procedure of deleting stitch rows along a course direction from the body of the possible data.
FIG. 5 is a diagram illustrating a procedure of inserting stitch rows along the course direction into the body of the possible data.
FIG. 6 is a diagram illustrating an application example of the knit design system according to Embodiment 1.

### Description of Embodiments

Hereinafter, an exemplified embodiment of the knit design system of the present invention will be described with reference to the drawings.

### Embodiment 1

### Overall Configuration

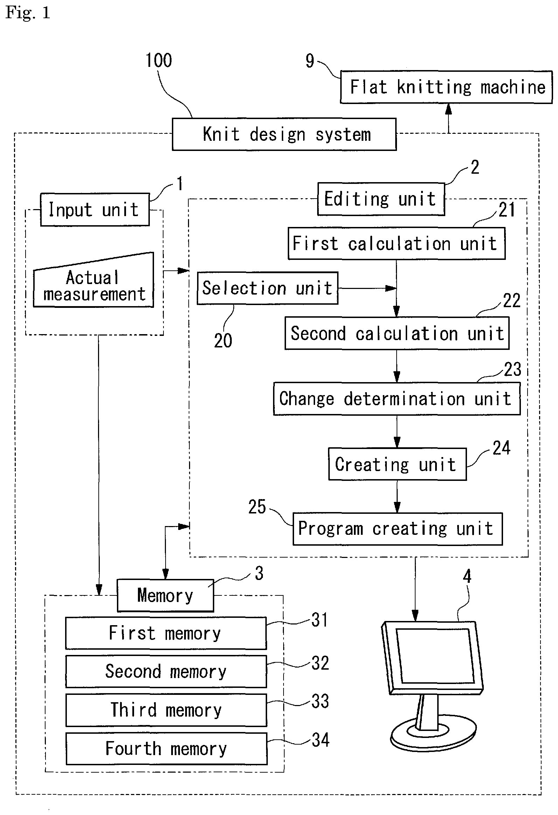

A knit design system 100 according to Embodiment 1 shown in a functional block diagram of FIG. 1 includes an input unit 1, an editing unit 2, a memory 3, and a display unit 4. This knit design system 100 has a function of creating a program for causing a flat knitting machine 9 to knit a knitted fabric based on design data that includes information relating to stitches constituting the knitted fabric. This knit design system 100 also has a function of designing a knitted fabric, that is, a function of newly creating design data of a knitted fabric, modifying existing design data, and the like. The flat knitting machine 9 may be, for example, a two-bed flat knitting machine or a four-bed flat knitting machine.

A characteristic of the knit design system 100 of Embodiment 1 may be such that the knit design system 100 is configured to adjust the length dimension to be set for design data of a knitted fabric based on the actual measurement of the body of a customer who is to wear knit wear. More specifically, the knit design system 100 regards design data that corresponds to a predetermined number of body dimensions set in advance as basic data, and adjusts, based on the above-described actual measurement, the length dimension of the basic data that has the body dimension most fitted to the actual measurement.

The following will first describe basic data. Then, configurations of the knit design system 100 will be described in detail.

### Basic Data

Design data is data that includes information relating to stitches constituting a knitted fabric, that is, data that includes information relating to the outer shape line of a knitted fabric, information relating to the dimensions, information relating to patterns of the knitted fabric, and the like, and defines what types of stitches are used in each portion of the knitted fabric and in which order knitting is to be performed. Information relating to stitches may be information relating to front stitches, back stitches, transfer, and the like, the numbers of stitches in the course direction and the wale direction, and the like. In other words, design data is data in which an execution procedure of a later-described knitting code is defined, and is like a blueprint of a knitted fabric. Design data is typically created based on the paper pattern that indicates the outer shape of a knitted fabric.

Here, an operator first sets a predetermined number of body dimensions for knit wear to be newly produced. Then, the operator creates pieces of design data that respectively correspond to the set body dimensions. The created pieces of design data are used as basic data for the body dimensions.

The types of body dimensions, the ranges of the dimensions, the number of classifications, and the like can be suitably selected by the operator. The types of body dimensions may include, for example, the body length, the sleeve length, the bust size, the waist size, the hip size, the shoulder width, and the like. Since the knit design system 100 adjusts the length dimension, the operator sets either or both of the body length and the sleeve length.

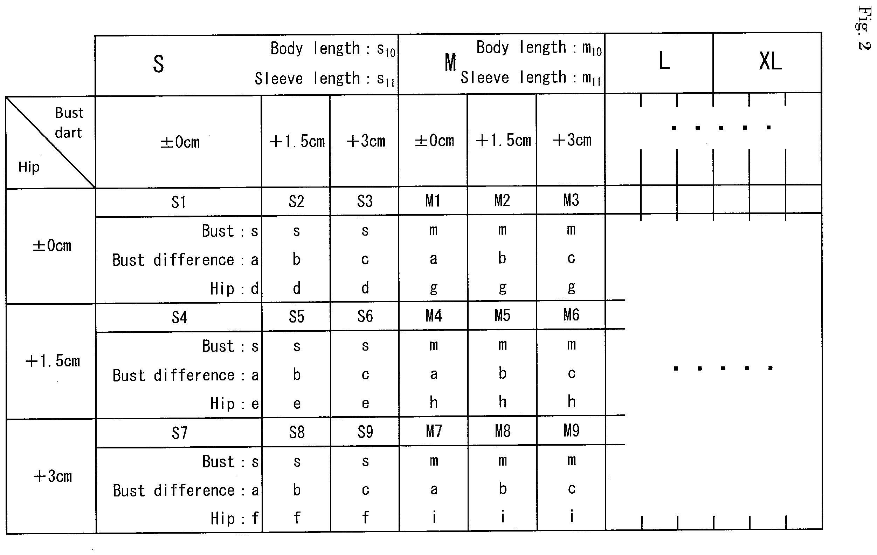

In the body dimension table shown in FIG. 2, four classifications of S, M, L, and XL are set based on bust size. For each of the classifications, the body length, the sleeve length, the bust size, the bust difference (between the top bust and the under bust), and the hip size are set. In this example, for each of the classifications, two increased sizes (+1.5 cm and +3 cm) are set for two items of the bust dart and the hip size. As a result, each of the classifications is further divided into sub-classifications. One such classification, for example the S size, may have nine sub-classifications S1 to S9. As a result, thirty six sub-classifications are set (9 × 4 = 36). Therefore, in this example, thirty six types of basic data are created for one type of knit wear.

Note that, in FIG. 2, the body length (s₁₀, m₁₀), the sleeve length (sn, m₁₁), the bust size (s, m), the bust difference (a to c), and the hip size (d to i) are denoted by small letter characters or the like, but actually numerical ranges (cm) are set.

The smaller the number of sub-classifications of the above-described body dimensions, the shorter the time for creating basic data. In this respect, the burden on the operator at the time of creating the basic data is mitigated. For example, a configuration is also possible in which, instead of the above-described thirty six types of basic data being prepared at the beginning, only basic data for the sub-classifications that are expected to be predominant in the distribution of the actual measurements of customers is created, and basic data for a sub-classification for which no basic data has been created will be created in response to a request from a customer. Basic data for a sub-classification for which no basic data has been created can be created in a short time by modifying existing basic data. If existing basic data is modified in this way, the burden on the operator is further mitigated compared to a case where pieces of basic data for all of the sub-classifications are created.

### Design Sheet

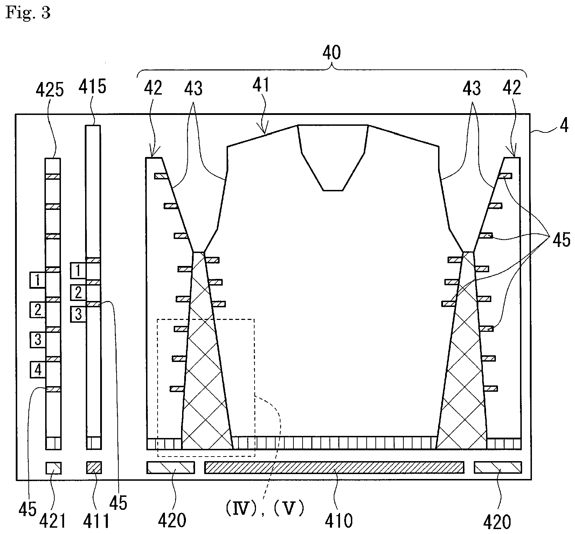

An editing operation such as creating new design data or modifying a size is performed in such a manner that, as shown in FIG. 3, design data serving as a design sheet 40 is displayed on the display unit 4 such as a monitor.

The design sheet 40 may be typically a sheet on which cells are arranged in a grid and a knitting code is assigned to each cell, each cell corresponding to one stitch. The lateral direction (in FIG. 3, the left-right direction of the paper plane) of the design sheet 40 corresponds to the course direction, that is, the width direction, of the knitted fabric. The longitudinal direction (in FIG. 3, the up-down direction of the paper plane) of the design sheet 40 corresponds to the wale direction, that is, the length direction, of the knitted fabric.

The knitting codes are icons expressed so that knitting operations to be performed by the flat knitting machine 9 can be distinguished visually. Each knitting code is expressed with, for example, a color, a numeric character, a figure, or a combination thereof. The knitting operation that corresponds to a knitting code is predetermined. For example, a knitting code expressed in red is defined as a knitting code for instructing the flat knitting machine 9 to form a front stitch, a knitting code expressed in green is defined as a knitting code for instructing the flat knitting machine 9 to form a back stitch, and so on. A plurality of knitting operations may also be defined for one knitting code. For example, there may be a knitting code for forming a front stitch and moving this front stitch to an opposite needle bed.

FIG. 3 schematically shows the design sheet 40 of a sweater in which a knitted fabric includes a body 41 and sleeves 42 (here, long sleeves). In FIG. 3, for ease of understanding of the following description, regions between outer lines extending from the lower ends of arm hole portions 43 of the body 41 to the lower end of the rib of the body 41, and outer lines extending from the lower ends of the arm hole portions 43 of the sleeves 42 to the lower ends of the cuffs are cross-hatched. These regions are portions in which no knitted fabric is provided.

White regions of the body 41 and the sleeves 42 shown in FIG. 3 are regions to which a knitting code is assigned for instructing the flat knitting machine 9 to knit a predetermined pattern. Hatched rectangular regions of the body 41 and the sleeves 42 shown in FIG. 3 are regions (which may be, hereinafter, referred to as increasing/decreasing portions 45) to which a knitting code for instructing the flat knitting machine 9 to form a widening or narrowing stitch is assigned.

Note that, in FIG. 3, hatched horizontally-long bars (range specification bars 410 and 420) that are located below the body 41 and the sleeves 42 indicate ranges in which the body 41 and the sleeves 42 are present in the course direction. In FIG. 3, two vertically-long bars (guide bars 415 and 425) located on the left side of the paper plane respectively indicate representative knitting codes assigned to the body 41 and the sleeves 42. Hatched short bars (specification bars 411 and 421) that are located below the guide bars 415 and 425 mean the body 41 and the sleeves 42, respectively. The usage of the guide bars 415 and 425 will be described later.

### Variable Course and Fixed Course

Variable courses and fixed courses are set in basic data. A variable course is a knitting course in which, in the basic data, at least one of modifications of inserting and deleting a stitch row along the course direction is possible. A fixed course is a knitting course in which, in the basic data, both of the modifications of inserting and deleting a stitch row along the course direction are prohibited. Here, a plurality of variable courses are set. Also, one or more fixed courses are set.

The fixed course may be set, for example, in the basic data at a position that is likely to have an influence on a predetermined design, the knitting efficiency, or the like. In other words, the fixed course may be set at the position where, if a stitch row along the course direction is inserted or deleted in the basic data, a predetermined design or silhouette is unlikely to be kept, wear comforts likely to be deteriorated, or the knitting efficiency is likely to be impaired, for example. The above-described position may be a position of, for example, a stitch row for widening, a stitch row for narrowing, a stitch row for constituting a predetermined pattern, or the like. If a fixed course includes at least one type of stitch row selected from a group of the above-listed stitch rows, variable courses are constituted by stitch rows other than the above-listed stitch rows. Accordingly, at least one of the following effects can be achieved.
(a) A predetermined design or silhouette is likely to be kept.
(b) A comfortable knitted fabric is likely to be obtained.
(c) An easily knittable knitted fabric, that is, a knitted fabric knitted with high knitting efficiency is likely to be obtained.

The variable courses may be set from the positions other than the fixed courses in the basic data. In short, the variable courses may be set at positions on the lower side of the arm hole portions 43 excluding the increasing/decreasing portions 45. In the case of pants, the variable courses may be set at positions on the lower side of a crotch excluding the increasing/decreasing portions 45.

The variable courses and the fixed courses may be automatically set using knitting codes as indices, for example. In this case, for example, a configuration is possible in which stitch rows are searched for in the wale direction over the entire body 41 or the entire sleeves 42, and stitch rows included in the above-described group are automatically set as fixed courses and the stitch rows other than the stitch rows included in the above-described group are automatically set as variable courses. The search range is not necessarily the entire body 41 or the entire sleeves 42, but, for example, a portion in which no length adjustment is to be performed, or the like may be excluded from the search range. The portion in which no length adjustment is to be performed may be, for example, the rib, the cuffs (in FIG. 3, the striped regions), the sides, and the vicinity thereof. An operator may also designate variable courses and fixed courses while viewing the design sheet 40.

The basic data includes settings of the above-described knitting codes, variable courses, and fixed courses, and is stored in the memory 3 (here, a first memory 31).

### Configurations of Knit Design System

### Input Unit

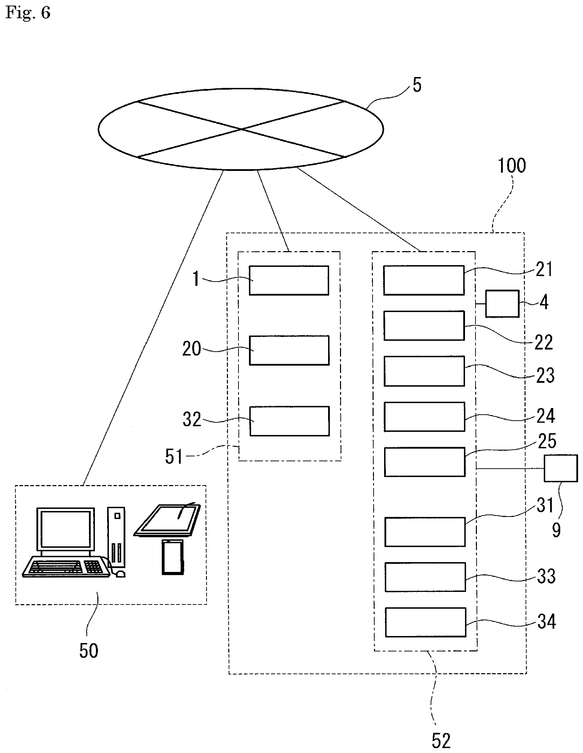

The input unit 1 of the present example is used when an operator inputs information relating to the actual measurements of the body of a customer who is to wear knit wear to the editing unit 2 or the memory 3 (here, a second memory 32). The input unit 1 may include various types of input interfaces. If the information relating to the actual measurements is imported into the knit design system 100 via a network 5 (FIG. 6) as described later, a receiving unit for receiving the information relating to the actual measurements will function as the input unit 1. The method for inputting the actual measurements will be described in "Application Example of Knit Design System", which will be described later.

Furthermore, the input unit 1 is used when the operator edits design data. For example, the input unit 1 is used to set a fixed course or the like in the design sheet 40 displayed on the display unit 4 as described above, or to set the preferential order of modification or the upper limit number of modification in the design sheet 40 of the possible data as will be described later, for example. In this case, the input unit 1 may include, for example, a keyboard, a mouse, a scanner, a digitizer, or the like.

### Editing Unit

The editing unit 2 has a function of creating various types of data relating to the design of a knitted fabric. The editing unit 2 of the present example includes a selection unit 20, a first calculation unit 21, a second calculation unit 22, a change determination unit 23, a creating unit 24, a program creating unit 25, and the like. The editing unit 2 may be constituted by one or more computers. Furthermore, the editing unit 2 may also include a basic data creating unit (not shown) for creating the above-described basic data.

Hereinafter, configurations of the editing unit 2 will be described.

### Selection Unit

The selection unit 20 compares the input actual measurements of the body of a customer with the body dimensions set in the basic data, and selects, from the basic data, possible data that is fitted to the actual measurements. In a case where thirty six pieces of basic data are set as described above, the selection unit 20 compares the actual measurements with basic data of sub-classifications of the body dimension table shown in FIG. 2, and selects, from the thirty six pieces of basic data, the basic data of the sub-classification that matches the actual measurements, or the basic data of the sub-classification that is the closest to the actual measurements. The following will describe an example in which the possible data is the basic data of the sub-classification M5 (body length: m₁₀, and the sleeve length: m₁₁).

The selection unit 20 uses actual measurements directly input to the editing unit 2 or actual measurements read from the memory 3 as the "input actual measurements of the body of a customer". The types of actual measurements may be, for example, the body height, the sleeve length (arm length), the bust size, the waist size, the hip size, the shoulder width, and the like. As the actual measurement needed for adjusting the length dimension, at least one of the body height and the sleeve length is input.

### First Calculation Unit

The first calculation unit 21 calculates the length dimension that is suitable for the knitted fabric, based on the above-described actual measurements of the body of the customer. A calculation formula for calculating the length dimension that is suitable for a knitted fabric is preset based on the design of the knitted fabric or the like. Typically, the calculation formula for the body length is set in a ratio to the body height of a customer. The calculation formula for the sleeve length is set in a ratio to the sleeve length of a customer. For example, the calculation formula for the body length of a one-piece suit is set as "height (= body height × 0.2) + skirt length (= body height × 0.3)" or the like. For example, the calculation formula for the sleeve length of a three-quarter sleeve is set as "sleeve length of a customer × 0.8" or the like. Constants of these calculation formulae are given as examples, and an operator can suitably change and set them.

The calculation formulae are stored in the memory 3 (here, a third memory 33). The first calculation unit 21 uses actual measurements directly input to the editing unit 2 or actual measurements read from the memory 3 to perform calculation.

### Second Calculation Unit

In order to perform at least one of modifications of inserting and deleting a stitch row along the course direction with respect to the length dimension of the selected possible data, the second calculation unit 22 obtains the number of stitch rows required for the modification. Typically, insertion or deletion is performed in units of two courses. The second calculation unit 22 obtains the number of units.

Specifically, the second calculation unit 22 calculates a difference between the length dimension set in the possible data, and the length dimension calculated by the first calculation unit 21. If, for example, the calculated body length is m₀, the difference in the body length is obtained as a result of (m₀ - m₁₀). If, for example, the calculated sleeve length is m₁, the difference in the sleeve length is obtained as a result of (m₁ - m₁₁).

Furthermore, the second calculation unit 22 calculates, based on the above-described difference, the number of stitch rows along the course direction that are to be used for a change in the length direction with respect to the length dimension of the possible data. The number of stitch rows (hereinafter, referred to as the number of units of change) is the number of stitch rows arranged parallel to each other in the wale direction, and can be obtained by dividing the above-described difference by the length dimension of each stitch. The length dimension of each stitch is obtained based on the number of stitches, gauge information, or the like.

The second calculation unit 22 reads information needed for calculation, such as a calculation formula, from the memory 3, and uses the read information for the calculation.

### Change Determination Unit

The change determination unit 23 determines the position in the length direction in the possible data at which the change is to be made. Specifically, the change determination unit 23 determines the positions, in the length direction, of the stitch rows, based on the number of stitch rows for performing at least one of modifications of inserting and deleting the stitch rows along the course direction with respect to the length dimension set in the possible data. Based on the number of units of change obtained by the second calculation unit 22, the positions of the stitch rows for performing the modification, that is, the positions of the stitch rows to be used for the change are determined. Specifically, the change determination unit 23 selects the stitch rows to be used for the change from the variable courses of the possible data, rather than from the fixed courses.

The change determination unit 23 of the present example is configured to be able to set the preferential order of modification (insertion or deletion) for a plurality of variable courses. Also, the change determination unit 23 selects the stitch row to be used for the change in the set preferential order.

Here, a variable course is set as a knitting course in which a modification such as insertion or deletion of a stitch row is to be made. However, depending on the position in the wale direction of the knitting course, the degree of influence on, for example, the design, the silhouette, wear comfort, or the knitting efficiency of the knitted fabric, or the like may differ. In contrast, with the configuration in which a stitch row to be used for the change is preferentially selected from the variable course at the position at which the degree of the influence is considered to be small, a knitted fabric with a favorable silhouette or wear comfort, or a knitted fabric that is easily to be knitted is likely to be obtained.

The preferential order of modification may be automatically set using knitting codes or the like as indices, for example. For example, the knitting courses constituting a portion immediately below the increasing/decreasing portion 45 or in the vicinity thereof, knitting courses constituting a portion in which outer shape does not substantially change or changes a little, the knitting courses constituting a plain portion without patterns, or the like may be set as variable courses having a high preferential order.

An operator may also designate the preferential order of modification while viewing the design sheet 40 of the possible data. Squares and numerical characters added to the left side of the guide bars 415 and 425 shown in FIG. 3 indicate the preferential order. This means that the smaller the numerical character in the square is, the higher the preferential order is. The preferential order is not necessarily indicated by numerical characters, and may also be indicated by colors.

Furthermore, a configuration is also possible in which the preferential order of modification is automatically preset, and the preset preferential order is displayed on the guide bars 415 and 425 of the design sheet 40, so that an operator can change the displayed preferential order.

Also, the change determination unit 23 of the present example is configured to be able to set an upper limit number of stitch rows to be added or deleted, with respect to the selected variable courses.

Here, if in a case where the number of units of change is large to some extent for example, stitch rows along the course direction are inserted or deleted in an concentrated manner to or from one variable course, it is conceivable that a predetermined design or silhouette is unlikely to be maintained, or that wear comfort is impaired. In contrast, with a configuration in which the number of stitch rows to be inserted or deleted to or from one variable course is limited, a knitted fabric with favorable silhouette or wear comfort is likely to be obtained. As in the present example, with a configuration in which the upper limit number of stitch rows to be increased or decreased, and the above-described preferential order of modification are set, a knitted fabric with favorable silhouette or wear comfort is further likely to be obtained.

The above-described upper limit number can be set suitably by an operator. In this case, a configuration is possible in which the set upper limit number is automatically set for selected variable courses. Alternatively, the editing unit 2 includes a third calculation unit (not shown), and the third calculation unit may perform calculation by dividing the number of units of change calculated by the second calculation unit 22 by the number of selected variable courses, and may regard the calculated value as the upper limit number. In this case, a configuration is possible in which the upper limit number calculated by the third calculation unit is automatically set for each variable course. In these two configurations, the same number of stitch rows are inserted or deleted to or from selected variable courses.

Alternatively, for example, a configuration is possible in which the upper limit number is automatically set with reference to the knitting codes of selected variable courses. As an example of this configuration, if there are fixed courses adjacent to each other in the wale direction with variable courses interposed therebetween, the upper value may be set based on the number of variable courses interposed (hereinafter, referred to as number of interposed courses) between the two fixed courses. The upper limit number may be set such that, if the number of interposed courses is small (for example, 5 or less), the upper limit number is set to be 1, if the number of interposed courses is large to some extent (for example, between 6 and 10 inclusive), the upper limit number is set to be 2, and if the number of interposed courses is large (for example, 11 or more), the upper limit number is set to be 3, for example. In this way, the upper limit number may be different from each other for variable courses, or may be the same as described above.

An operator may also designate the above-described upper limit number for each of selected variable courses, while viewing the design sheet 40. If the designated upper limit number is displayed, for example, on the left side of the guide bars 415 and 425, together with the above-described preferential order (not shown), the operator can easily recognize them. The method for displaying the upper limit number can be selected as appropriate.

The possible data that includes above-described number of units of change calculated by the second calculation unit 22, and modification information such as the positions of stitch rows determined by the change determination unit 23 are output to the creating unit 24.

### Creating Unit

The creating unit 24 increases or decreases the number of stitch rows along the course direction on the possible data, based on the above-described modification information, and creates modification data obtained by modifying the possible data.

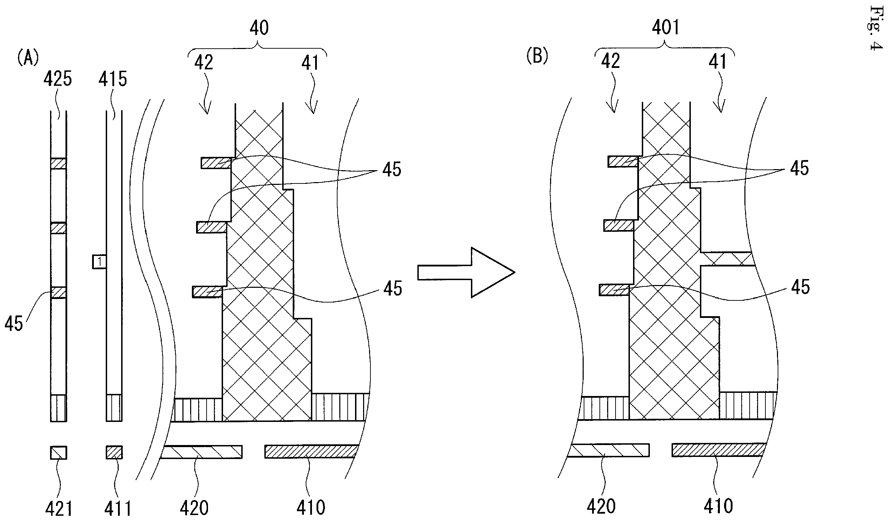

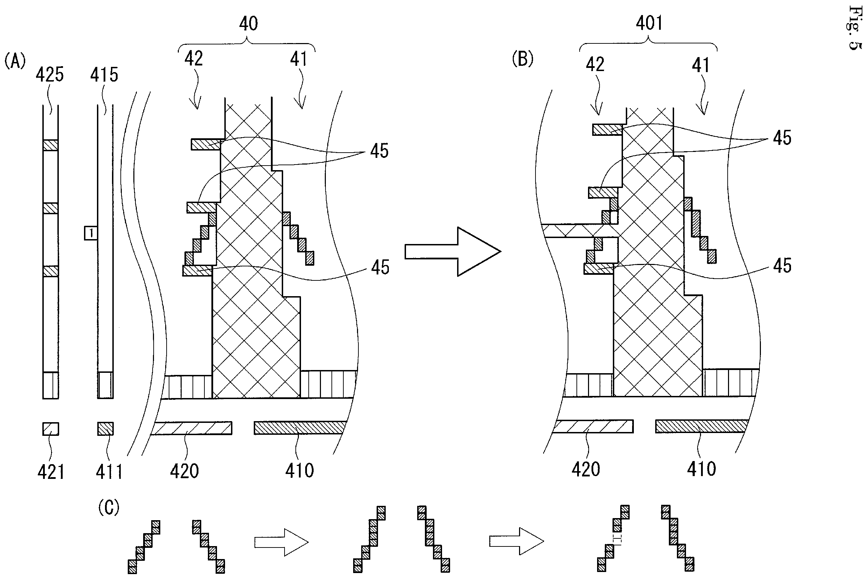

A configuration is possible in which modification data is automatically created based on the above-described modification information. Furthermore, as shown in FIGS. 4 and 5, the possible data and the modification information, as well as the modification data are displayed on the display unit 4, so that an operator can view the states before and after the modification. FIGS. 4(A) and 5(A) show enlarged portions of regions enclosed by a rectangle indicated by a dotted line on the design sheet 40 of the possible data shown in FIG. 3. FIGS. 4(B) and 5(B) show a design sheet 401 of the modification data.

The following will describe a case where only the body length is modified without modifying the sleeve length with reference to FIGS. 4 and 5.

As shown in FIG. 4, when stitch rows along the course direction, of the body 41 are deleted, the creating unit 24 deletes a predetermined number of stitch rows at the position of selected variable course of the possible data in the preferential order to create modification data. On the design sheet 401 of the modification data shown in FIG. 4(B), the sleeve 42 is maintained in the same state as in the possible data, and the body 41 is in a state in which the stitch row at the position of the variable course of the top of the preferential order is deleted. In FIG. 4(B), the portion in which the stitch row is deleted is cross-hatched.

As shown in FIG. 5, when stitch rows along the course direction are inserted into the body 41, the creating unit 24 inserts a predetermined number of stitch rows at selected positions in the variable courses of the possible data in the preferential order to create modification data. Here, the creating unit 24 is configured to create modification data in accordance with the following procedure. In FIG. 5, for ease of understanding of the following procedure, hatched step-shaped stitch groups are added to the body 41 and the sleeve 42. FIG. 5(C) shows only the step-shaped stitch groups, illustrating insertion or deletion of stitch rows, with the left figure showing the step-shaped stitch groups before modification, the central figure showing the step-shaped stitch groups during the modification, and the right figure showing the step-shaped stitch groups after the modification.

A stitch row is once inserted into both of the body 41 and the sleeve 42 of the possible data, at the position of the top of the preferential order in a variable course of the body 41 (see the central figure of FIG. 5(C)). Then, the stitch row inserted into the sleeve 42 is deleted, and the stitch row inserted into the body 41 is left as is (see the right figure of FIG. 5(C)). On the design sheet 401 of the modification data shown in FIG. 5(B), the sleeve 42 is in a state in which the stitch row at the above-described position is deleted, and the body 41 is in a state in which the stitch row at the above-described position is inserted. The portion of FIG. 5(B) in which the above-described stitch row is deleted is cross-hatched.

In the present example, as indicated through the comparison between FIG. 4(A) and FIG. 4(B), and the comparison between FIG. 5(A) and FIG. 5(B), the relative positions in the length direction of the body 41 and the sleeve 42 between before and after the modification do not change. With such modification data, knitting is easy.

Note that, although the case where only the body length is modified has been described, the same procedure as the above-described procedure can be performed, when only the sleeve length is modified and when both of the body length and the sleeve length are modified. Also, the modification information relating to the body length, and the modification information relating to the sleeve length can be set independently. Accordingly, it is possible to modify the body length and the sleeve length independently, while maintaining a series of knitting information in the course direction of the body 41 and the sleeves 42.

The creating unit 24 of the present example further creates modification data upon input of a knitting code relating to, for example, color or pattern as needed, with reference to the later-described additional items.

### Program Creating Unit

The program creating unit 25 creates a program for causing the flat knitting machine 9 to perform knitting based on the created modification data. In the program, actual needle operations, movement of the carriage, a procedure for supplying knitting yarn, and the like are defined. The program is transmitted to the flat knitting machine 9 via a recording medium such as a USB memory, wired communication, or wireless communication, for example. As a result of the flat knitting machine 9 operating in accordance with the program transmitted from the program creating unit 25, a knitted fabric is knitted.

### Memory

The memory 3 of the present example includes, as described above, the first memory 31 for storing basic data, the second memory 32 for storing the actual measurements of the body of a customer, and the third memory 33 for storing the above-described calculation formulae, setting values needed for other types of calculation, information relating to calculation such as calculation results, and the like.

The memory 3 of the present example further includes a fourth memory 34 for storing information relating to variable additional items of a knitted fabric. The additional items are set as variable items with respect to a knitted fabric, separately from the length modification that corresponds to the actual measurement. Examples of the additional items may include color, pattern, and preferable length. "Preferable length" (e.g., +2 cm or -2 cm) is suitably set by an operator for a standard value of the body length (e.g., s₁₀, m₁₀, and the like in FIG. 2) and a standard value of the sleeve length (e.g., s₁₁, m₁₁ and the like in FIG. 2) that are set for a knitted fabric. If the customer selects a preferable length, the first calculation unit 21 calculates the length suitable for the knitted fabric, by adding or subtracting the preferable length dimension value to or from the actual measurement.

The memory 3 is constituted by one or more storage devices. Furthermore, the memory 3 can store another type of information relating to the design of a knitted fabric.

### Display Unit

The display unit 4 is used for an operator to visually recognize information relating to the design of a knitted fabric. The information to be displayed may include the above-described design sheets 40 and 401, and the like. Examples of the display unit 4 include a liquid crystal display and a touch panel. If the display unit 4 is a touch panel, part of the display unit 4 may function as the input unit 1.

### Application Example of Knit Design System

As shown in FIG. 6, a knit design system 100 according to Embodiment 1 includes a plurality of servers (here, servers 51 and 52), which may be connected to each other via the network 5.

Here, the actual measurements of the body of a customer may be transmitted from a terminal device 50 of the customer, a shop of an apparel manufacturer, or the like to the knit design system 100 via the network 5. The terminal device 50 may be an information processing device such as a personal computer, a tablet computer, or a smartphone. Actual measurements may be obtained by the customer itself or a staff of a shop, or using a measurement application or the like.

The server 51 may mainly input the above-described actual measurements, and select possible data. The server 52 may mainly modify the possible data.

The server 51 of the present example includes the input unit 1, the selection unit 20, the second memory 32, and the like. The server 51 also includes a memory (not shown) for storing codes of sub-classifications added to the above-described body dimension table shown in FIG. 2, codes relating to the above-described additional items, and the like. The selection unit 20 of the server 51 compares the actual measurements with the sub-classifications, and selects the sub-classification that is fitted to the actual measurements. The server 51 transmits the code of the selected sub-classification, the additional item code, the actual measurements, and the like to the server 52.

The server 52 of the present example includes the first calculation unit 21, the second calculation unit 22, the change determination unit 23, the creating unit 24, the program creating unit 25, the first memory 31, the third memory 33, the fourth memory 34, and the like. The server 52 compares the sub-classification code transmitted from the server 51 with the basic data stored in the first memory 31, and specifies possible data. The first calculation unit 21 of the server 52 uses the transmitted actual measurement to calculate the length dimension. If there is the above-described additional item (preferable length), the first calculation unit 21 of the server 52 calculates the length dimension by adding or subtracting the preferable length value to or from the actual measurement, based on the additional item code transmitted from the server 51. If there is the above-described additional item (color/pattern), the creating unit 24 of the server 52 compares the additional item code transmitted from the server 51 with the information relating to the additional item stored in the fourth memory 34 to specify the knitting code, and creates modification data.

### Main Effects

According to the knit design system 100 of the present example, it is possible to reduce the number of pieces of design data to be prepared in advance, while enabling knitting of a knitted fabric that matches the body of a customer, specifically, the body length or the sleeve length. In the above-described example, it is sufficient to prepare thirty six types of basic data, eliminating the need of preparing several thousand pieces of basic data or more. Also, the knit design system 100 only needs to modify selected possible data based on the above-described difference, and does not need to newly create design data based on the actual measurement of the body of a customer.

### Other Embodiments

In Embodiment 1, an example has been described in which the preferential order and the upper limit number can be set.

Furthermore, the change determination unit 23 may be configured to evenly distribute a plurality of stitch rows to be used for a change over a plurality of variable courses. In this case, the editing unit 2 may include the following a fourth calculation unit (not shown). The fourth calculation unit divides the number of selected variable courses by the number of units of change calculated by the second calculation unit 22, thereby calculating the number of stitch rows to be inserted or deleted in the variable courses. The number of selected variable courses may be preset.

Furthermore, the change determination unit 23 may be configured to select, if the preferential order of modification is set, the variable courses from the top to, for example, x-th position therefrom in the preferential order, and distribute the stitch rows over the selected variable courses. x is an integer that is suitably set.

Alternatively, in a case where the preferential order of modification and the upper limit numbers of modification are set, if there are a plurality of variable courses having different upper limit numbers, the change determination unit 23 may be configured in the following manner. First, for each of the variable courses, the change determination unit 23 performs insertion or deletion for each unit of change in the preferential order. Then, for each of the variable courses having the upper limit number of 2 or more, the change determination unit 23 performs insertion or deletion for each unit of change in the preferential order. Then, for each of the variable courses having the upper limit number of 3 or more, the change determination unit 23 performs insertion or deletion for each unit of change in the preferential order. The change determination unit 23 is configured to set the positions of variable courses by repeatedly performing such a procedure.

In the configuration in which, for a plurality of variable courses, insertion or deletion of stitch rows along the course direction are evenly performed, a knitted fabric having a favorable silhouette and wear conform, and the like is more likely to be obtained than in a configuration in which, as described above, insertion or deletion of the stitch rows is made in a concentrated manner with respect to one variable course. In addition to this configuration, if the preferential order of modification is set, a knitted fabric having a favorable silhouette and wear conform is further likely to be obtained.

## Claims

1. A knit design system (100) comprising a program creating unit (25) for causing a flat knitting machine (9) to perform knitting based on created modification data that includes information relating to stitches constituting the knitted fabric, and comprising:
an input unit (1) configured to input information relating to the actual measurements of the body of a customer;
a memory (3) in which the design data that corresponds to a predetermined number of body dimensions set in advance is stored as basic data, wherein the basic data includes the information of the number of stitch rows arranged parallel to each other in the wale direction and a length dimension of each stitch;
a selection unit (20) configured to compare an input actual measurement of a body of a customer including at least one of body length and sleeve length with the body dimensions set in the basic data, and select, from the basic data, possible data which is a selected basic data that matches the actual measurement or the closest to the actual measurements,
a first calculation unit (21) configured to calculate, based on the actual measurement and a calculation formula that is preset based on the design of the knitted fabric and stored in the memory (3), a length dimension in the wale direction of the knitted fabric, the length dimension being suitable for the knitted fabric;
a second calculation unit (22) configured to calculate, based on a difference between a length dimension set in the possible data and the calculated length dimension, the number of stitch rows along a course direction that are to be inserted or deleted from the possible data to change the length direction of the possible data into the calculated length dimension;
a change determination unit (23) configured to determine one or more positions of stitch row in the possible data at which the change in the length direction by addition or deletion of stitch rows, is to be made; and
a creating unit (24) configured to create modification data which is the possible data with addition or deletion of stitch rows based on the calculated number of stitch rows and the determined position,
wherein, in the basic data, a plurality of variable courses in which at least one of modifications of inserting and deleting a stitch row along the course direction is possible, and a fixed course in which both of the modifications are prohibited are set, and
the change determination unit (23) selects, from the variable courses, the stitch rows to be used for the change.

2. The knit design system according to claim 1,
wherein the change determination unit (23) is configured to be able to set a preferential order of the modification for the plurality of variable course, and selects the stitch row positions in the set preferential order.

3. The knit design system according to claim 1,
wherein the change determination unit (23) is configured to evenly distribute the stitch row positions to be used for the change over the plurality of variable courses.

4. The knit design system according to any one of claims 1 to 3,
wherein the change determination unit (23) is configured to be able to set an upper limit number of stitch rows to be added or deleted to or from the selected variable courses.

5. The knit design system according to any one of claims 1 to 4,
wherein the fixed course includes at least one type of stitch row selected from a group constituted by a stitch row for widening, a stitch row for narrowing, and a stitch row constituting a predetermined pattern.

## Patentansprüche

1. Strickentwurfssystem (100) das eine Programmerstellungseinheit (25) umfasst, die eine Flachstrickmaschine (9) veranlasst zum Durchführen eines Strickens basierend auf erstellten Modifikationsdaten, die Informationen in Bezug auf Maschen eines Gestricks enthalten, umfassend:
eine Eingabeeinheit (1), die konfiguriert ist zum Eingeben von Informationen in Bezug auf die tatsächlichen Körpermaße eines Benutzers,
einen Speicher (3), in dem Entwurfsdaten in Entsprechung zu einer vorbestimmten Anzahl von zuvor gesetzten Körpermaßen als Basisdaten gespeichert sind, wobei die Basisdaten Informationen zu der Anzahl von parallel in der Maschenstäbchenrichtung angeordneten Strickreihen und der Längendimension jeder Masche umfassen,
eine Auswahleinheit (20), die konfiguriert ist zum Vergleichen von eingegebenen tatsächlichen Körpermaßen eines Kunden einschließlich einer Körperlange und/oder einer Ärmellänge mit den in den Basisdaten gesetzten Körpermaßen und zum Auswählen, aus den Basisdaten, von möglichen Daten, die ausgewählte Basisdaten sind, die den tatsächlichen Maßen entsprechen oder den tatsächlichen Maßen am nächsten kommen,
eine erste Berechnungseinheit (21), die konfiguriert ist zum Berechnen, basierend auf den tatsächlichen Maßen und einer Berechnungsformel, die basierend auf dem Entwurf des Gestricks vorgegeben wird und in dem Speicher (3) gespeichert ist, einer Längendimension in der Maschenstäbchenrichtung des Gestricks, wobei die Längendimension für das Gestrick geeignet ist,
eine zweite Berechnungseinheit (22), die konfiguriert ist zum Berechnen, basierend auf einer Differenz zwischen einer in dem möglichen Daten gesetzten Längendimension und der berechneten Längendimension, der Anzahl von Maschenreihen entlang einer Reihenrichtung, die in die möglichen Daten einzufügen oder aus diesen zu entfernen sind, um die Längenrichtung der möglichen Daten zu der berechneten Längendimension zu ändern,
eine Änderungsbestimmungseinheit (23), die konfiguriert ist zum Bestimmen einer oder mehrerer Positionen von Maschenreihen in den möglichen Daten, an denen die Änderung in der Längenrichtung durch das Hinzufügen oder Entfernen von Maschenreihen vorzunehmen ist, und
eine Erstellungseinheit (24), die konfiguriert ist zum Erstellen von Modifikationsdaten, die die möglichen Daten mit einer Hinzufügung oder Entfernung von Maschenreihen basierend auf der berechneten Anzahl von Maschenreihen und der bestimmten Position sind,
wobei, in den Basisdaten, eine Vielzahl von variablen Reihen, in denen zumindest eine der Modifikationen zum Einfügen und Löschen einer Maschenreihe entlang der Reihenrichtung möglich sind, und eine fixe Reihe, in der beide Modifikationen unterbunden werden, gesetzt sind, und
wobei die Änderungsbestimmungseinheit (23), aus den variablen Reihen, die für die Änderung zu verwendenden Maschenreihen auswählt.

2. Strickentwurfssystem nach Anspruch 1,
wobei die Änderungsbestimmungseinheit (23) derart konfiguriert ist, dass sie eine bevorzugte Reihenfolge der Modifikation für die Vielzahl von variablen Reihen setzen kann, und die Maschenreihenpositionen in der gesetzten bevorzugten Reihenfolge auswählt.

3. Strickentwurfssystem nach Anspruch 1,
wobei die Änderungsbestimmungseinheit (23) konfiguriert ist zum gleichmäßigen Verteilen der für die Änderung zu verwendenden Maschenreihenpositionen über die Vielzahl von variablen Reihen.

4. Strickentwurfssystem nach einem der Ansprüche 1 bis 3,
wobei die Änderungsbestimmungseinheit (23) derart konfiguriert ist, dass sie eine Obergrenze für die Anzahl von Maschenreihen, die zu den ausgewählten variablen Reihen hinzuzufügen oder aus diesen zu entfernen sind, setzen kann.

5. Strickentwurfssystem nach einem der Ansprüche 1 bis 4,
wobei die fixierte Reihe wenigstens ein Typ von Maschenreihe ist, der aus der Gruppe ausgewählt ist, die eine Maschenreihe für eine Verbreiterung, eine Maschenreihe für eine Verschmälerung und eine Maschenreihe, die ein vorbestimmtes Muster bildet, umfasst.

## Revendications

1. Système de conception de tricot (100) comprenant une unité de création de programme (25) pour amener une machine à tricoter à plat (9) à effectuer une opération de tricotage sur la base de données de conception qui comportent des informations concernant des mailles constituant le tricot, et comprenant :
une unité d'entrée (1) configurée pour entrer des informations concernant des mesures réelles du corps d'un client ;
une mémoire (3) dans laquelle les données de conception qui correspondent à un nombre prédéterminé de dimensions de corps définies à l'avance sont stockées en tant que données de base, dans lequel les données de base comportent les informations du nombre de rangs de mailles agencés en parallèle dans la direction de colonne et d'une dimension de longueur de chaque maille ;
une unité de sélection (20) configurée pour comparer une mesure réelle entrée d'un corps d'un client comportant au moins une longueur parmi la longueur du corps et la longueur de manches aux dimensions du corps, et pour sélectionner, parmi les données de base, des données possibles qui sont des données de base sélectionnées qui correspondent à la mesure réelle ou au plus proche de la mesure réelle ;
une première unité de calcul (21) configurée pour calculer, sur la base de la mesure réelle et d'une formule de calcul qui est prédéfinie sur la base du motif du tricot et stockée dans la mémoire (3), une dimension de longueur dans la direction de colonne du tricot, la dimension de longueur étant adaptée au tricot ;
une deuxième unité de calcul (22) configurée pour calculer, sur la base d'une différence entre une dimension de longueur définie dans les données possibles et la dimension de longueur calculée, le nombre de rangs de mailles le long d'une direction d'extension qui doivent être insérées dans ou supprimées des données possibles pour modifier la direction de longueur des données possibles dans la dimension de longueur calculée ;
une unité de détermination de modification (23) configurée pour déterminer une ou plusieurs positions de rangs de mailles dans les données possibles auxquelles la modification dans la direction de longueur, par ajout ou par suppression de rangs de mailles, doit être effectuée ; et
une unité de création (24) configurée pour créer des données de modification qui sont les données possibles auxquelles sont ajoutées ou supprimées les rangs de mailles sur la base du nombre calculé de rangs de mailles et de la position déterminée,
dans lequel, dans les données de base, une pluralité de directions variables dans lesquelles au moins une des modifications d'insertion et de suppression d'un rang de mailles le long de la direction d'extension est possible, et d'un rang fixe dans lequel les deux modifications sont interdites sont définies, et
l'unité de détermination de modification (23) sélectionne, à partir des rangs variables, les rangs de mailles à utiliser pour la modification.

2. Système de conception de tricot selon la revendication 1,
dans lequel l'unité de détermination de modification (23) est configurée pour pouvoir définir un ordre préférentiel de la modification pour la pluralité de rangs variables, et sélectionne les positions de rang de mailles dans l'ordre préférentiel défini.

3. Système de conception de tricot selon la revendication 1,
dans lequel l'unité de détermination de changement (23) est configurée pour répartir uniformément les positions de rang de mailles à utiliser pour la modification sur la pluralité de directions variables.

4. Système de conception de tricot selon l'une quelconque des revendications 1 à 3,
dans lequel l'unité de détermination de modification (23) est configurée pour pouvoir régler un nombre limite supérieur de rang de mailles à ajouter aux ou supprimer des rangs variables sélectionnés.

5. Système de conception de tricot selon l'une quelconque des revendications 1 à 4,
dans lequel la direction fixe comporte au moins un type de range de mailles sélectionné dans un groupe constitué d'un rang de mailles pour l'élargissement, d'un rang de mailles pour le rétrécissement, et d'un rang de mailles constituant un motif prédéterminé.
